# FASCICULE DE BREVET EUROPEEN

(11) **EP 2 613 391 B1**
(45) Date de publication et mention de la délivrance du brevet: **25.05.2016**
(21) Numéro de dépôt: 12193551.4
(22) Date de dépôt: 21.11.2012
(51) Int. Cl.: H01M 8/24, H01M 8/04, H01M 8/10

(54) **Pile à combustible**
Brennstoffzelle
Fuel cell

(30) Priorité: 03.01.2012 FR 1250031
(43) Date de publication de la demande: 10.07.2013
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Cerceau, Arnaud, 38850 Charavines (FR); Jannin, Nicolas, 38360 Sassenage (FR); Marteau, Julien, 38000 Grenoble (FR)
(74) Mandataire: De Cuenca, Emmanuel Jaime

(56) Documents cités:
- WO-A1-01/73879
- DE-A1-102007 054 246
- DE-A1-102010 007 857
- FR-A1- 2 843 236
- US-A1- 2010 183 936

## Description

La présente invention concerne une pile à combustible selon la revendication 1.

L'invention concerne plus particulièrement une pile à combustible comprenant plusieurs empilements de cellules élémentaires de pile à combustible, au moins une partie des empilements étant montés en parallèle et de façon modulaire pour permettre d'adapter le niveau le niveau de puissance électrique fourni par la pile en adaptant le nombre d'empilements présents dans la pile, la pile comprenant un circuit de refroidissement comprenant plusieurs branches en parallèles pour le refroidissement sélectif desdits empilements par échange thermique, un liquide caloporteur étant sélectivement mis en circulation dans le circuit de refroidissement via au moins une pompe.

L'invention concerne notamment des piles à combustibles à structure modulaire. C'est à dire que la pile à combustible est formée de modules élémentaires formant les principaux éléments fonctionnels de la pile. Selon cette architecture, en fonction des besoins de l'application, le nombre d'éléments modulaires est ajusté. Par exemple, en fonction de la puissance électrique requise, le nombre de d'empilements de cellules élémentaires (« stacks ») peut être ajusté pour la pile.

De préférence, chaque élément modulaire comprend un empilement de cellules et son propre système d'alimentation en gaz carburant (hydrogène) et comburant (air). Chaque module peut ainsi comporter son propre compresseur.

D'autres éléments de la pile sont mutualisés, par exemple un convertisseur de puissance, la pompe et l'échangeur de chaleur du circuit de refroidissement liquide.

Cette architecture est globalement satisfaisante, cependant, la pompe du circuit de refroidissement doit être dimensionnée pour alimenter de façon satisfaisante toutes les branches du réseau de refroidissement (chacun des empilements de cellules). Cela signifie que la pompe doit être dimensionnée pour les débits maximum (nombre de modules d'empilements maximum utilisés simultanément). Les rendements des pompes sont cependant très variables sur leur plage de débits. Dans le cas où un seul empilement est utilisé pour la pile, la pompe sera utilisée à bas régime et son rendement risque d'être dégradé. Dans certaines situations, la pompe pourrait être incapable de fournir un débit en dessous d'une certaine valeur.

Un but de la présente invention est de pallier tout ou partie des inconvénients de l'art antérieur relevés ci-dessus.

A cette fin, la pile à combustible selon l'invention, par ailleurs conforme à la définition générique qu'en donne le préambule ci-dessus, est essentiellement caractérisée en ce que le circuit de refroidissement comprend des pompes distinctes disposées respectivement dans plusieurs desdites branches du circuit de refroidissement.

L'invention comporte aussi les caractéristiques suivantes :
- le circuit de refroidissement comporte une pompe respective dans chacune desdites branches parallèles du circuit de refroidissement, lesdites pompes étant structurellement liées auxdits empilements modulaires correspondants,

Par ailleurs, des modes de réalisation de l'invention peuvent comporter l'une ou plusieurs des caractéristiques suivantes:
- chaque ensemble comprenant une branche du circuit de refroidissement, une pompe, et un empilement correspondants sont structurellement lié dans un boîtier amovible, une extrémité de la branche comprenant des organes de connexion fluidique rapide amovible coopérant sélectivement avec des organes conjugués formés sur la partie du circuit de refroidissement commune à tous les empilements située en dehors des branches,
- les organes de connexion fluidique de la branche et les organes conjugués formés sur la partie du circuit de refroidissement commune sont du type à ouverture automatique lors de la connexion fluidique et à fermeture automatique lors de la déconnexion,
- le circuit de refroidissement comprend un échangeur de chaleur de refroidissement sélectif du liquide caloporteur, ledit échangeur de chaleur étant disposée dans une partie du circuit de refroidissement commune à tous les empilements, c'est-à-dire en dehors des branches parallèles des empilements modulaires,
- le circuit de refroidissement comprend une portion de by-pass sélectif de l'échangeur de chaleur et au moins une vanne de répartition sélective du liquide dans la portion de by-pass,
- le circuit de refroidissement comprend un réchauffeur du liquide caloporteur disposé dans la portion de by-pass de l'échangeur de chaleur,
- la pile comprend une logique électronique reliée aux différentes pompes situées dans les branches parallèles du circuit de refroidissement, la logique électronique étant configurée pour réguler indépendamment lesdites pompes et donc les débits de liquide de refroidissement dans lesdites branches parallèles,
- les branches du circuit de refroidissement de refroidissement comprennent chacune un clapet anti-retour disposé en aval de la pompe et de l'empilement correspondant pour empêcher un écoulement de liquide à l'encontre du sens de circulation de fluide créé par la pompe.

L'invention peut concerner également tout dispositif ou procédé alternatif comprenant toute combinaison des caractéristiques ci-dessus ou ci-dessous.

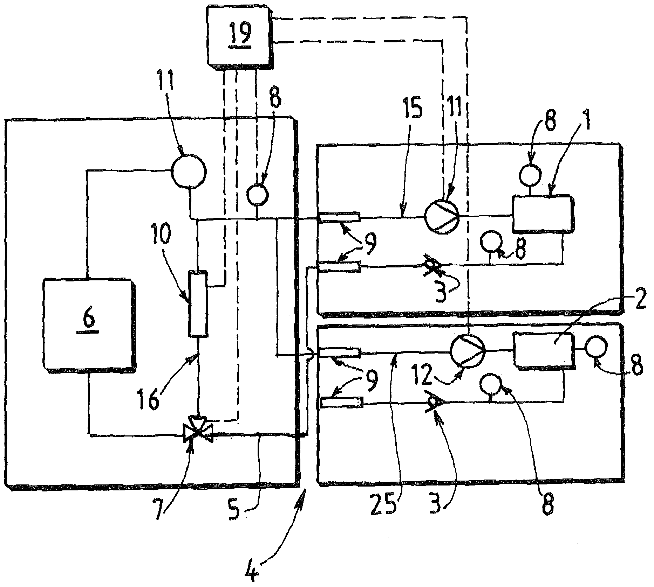

D'autres particularités et avantages apparaîtront à la lecture de la description ci-après, faite en référence à la figure unique qui représente de façon schématique et partielle un exemple de structure et de fonctionnement possible d'une pile à combustible selon l'invention.

Par soucis de simplification, la pile à combustible illustrée partiellement à titre d'exemple sur la figure comprend deux empilements 1, 2 (« Stacks » en anglais) de cellules élémentaires de pile à combustible. Bien entendu, la pile 4 peut comporter plus de deux empilements. Chaque cellule élémentaire produit de l'électricité par réaction entre de l'hydrogène et de l'oxygène au sein d'un assemblage membrane électron séparant une anode et une cathode.

Ces empilements 1, 2 sont de préférence montés de façon sélectivement détachable du reste de la pile 4. Ces empilement 1, 2, qui peuvent comprendre chacun des organes propres de gestion des flux de gaz carburant (hydrogène) et comburant (air), sont montés en parallèle et de façon modulaire pour permettre d'adapter le niveau le niveau de puissance électrique fourni par la pile 4 en adaptant le nombre d'empilements 1, 2 de cellules.

La pile possède un circuit 5 de refroidissement comprenant plusieurs branches 15, 25 en parallèles pour le refroidissement sélectif desdits empilements 1, 2 par échange thermique. Un liquide caloporteur est sélectivement mis en circulation dans le circuit 5 de refroidissement.

Le circuit de refroidissement comprend des pompes 11, 12 distinctes disposées respectivement dans toutes les branches 15, 25 parallèles du circuit 5 de refroidissement.

Cette particularité permet d'améliorer le rendement global du système en maîtrisant la consommation énergétique des pompes 11, 12 de chacune des branches 15, 25.

Le circuit 5 de refroidissement comprend classiquement un échangeur 6 de chaleur de refroidissement sélectif du liquide caloporteur. De préférence, l'échangeur 6 de chaleur est disposé dans une partie du circuit 5 de refroidissement qui est commune à tous les empilements 1, 2. C'est-à-dire que l'utilisation de l'échangeur 6 est mutualisée en dehors des branches 15, 25 parallèles des empilements 1, 2 modulaires.

Les pompes 11, 12 respectives sont structurellement liées auxdits empilements 1, 2 modulaires correspondants par exemple dans un boîtier correspondant comprenant des organes 9 de raccord fluidique entre les branches 15, 25 et le reste du circuit 5. Ces organes 9 de raccord et leurs raccords conjugués sur le reste du circuit 5 forment par exemple des raccords rapides à double obturation permettant de séparer un module tout en permettant le fonctionnement du reste du circuit.

Comme représenté, chaque branche 15, 25 peut former une boucle dont deux extrémités sont raccordées sélectivement au reste du circuit 5 au moyen de respectivement deux organes 9 de raccord fluidique.

De préférence également, un clapet 3 anti-retour est disposé dans chaque branche, en aval de l'empilement 1, 2 pour permettre au liquide caloporteur de circuler dans tout le circuit 5.

Un vase d'expansion 11 est de préférence prévu dans le circuit 5, dans la partie commune (hors des branches 15, 25), pour absorber les variations de volume de liquide.

De cette façon, chaque pompe 11, 12 est intégrée dans son module respectif de la pile. Lorsqu'un module avec un empilement 1, 2 est ajouté ou retiré relativement à la pile, la pompe 11, 12 correspondante suit cet empilement.

La pompe 11, 12 intégrée dans le module sélectivement détachable est dimensionnée pour la gamme de débit associée audit module et son rendement est donc optimisé en conséquence.

Le circuit 5 de refroidissement comprend de préférence également une portion 16 de by-pass sélectif de l'échangeur 6 de chaleur et au moins une vanne 7 (par exemple une électrovanne à trois voies) de répartition sélective ou non du liquide dans la portion de by-pass. Comme représenté à la figure, le circuit 5 de refroidissement peut comprendre facultativement un réchauffeur 10 du liquide caloporteur disposé dans la portion 16 de by-pass de l'échangeur 6 de chaleur.

Le circuit 5 de refroidissement comprend de préférence un capteur 8 de température du liquide caloporteur du circuit 5 de refroidissement disposé dans la partie commune du circuit (hors des branches 15, 25). Bien entendu, d'autres capteurs 8 de température peuvent être prévus au niveau de chaque empilement 1, 2 et/ou dans chaque branche 15, 25, par exemple en aval de chaque empilement 1, 2.

Le gradient de température peut être calculé selon la formule suivante : max(Température de la pile; Température du liquide de refroidissement à la sortie de la pile) - Température du liquide de refroidissement en amont du module.

La pile ou l'installation comprenant la pile 4 comporte de préférence une logique 19 électronique reliée aux différentes pompes 11, 12 situées dans les branches 15, 25 parallèles du circuit 5 de refroidissement. La logique peut être reliée également au(x) capteur(s) 8 et à la vanne 7 de by-pass.

Selon une particularité avantageuse, la logique 19 électronique peut être configurée pour réguler indépendamment la puissance des pompes 11, 12 et donc les débits de liquide de refroidissement dans lesdites branches 15, 25 parallèles.

Cette configuration permet de contrôler et de réguler le gradient de température au sein de chaque empilement 1, 2. La différenciation possible des débits de liquide de refroidissement dans les modules permet si besoin de faire évoluer les paramètres de régulation thermique en temps réelle (gradient de température au sein de l'empilement par exemple).

Il est possible d'imaginer notamment de pouvoir déconnecter un module (un empilement) alors que toutes les autres sont actifs sans que cela n'ai d'impact sur la régulation en température des empilements actifs.

En cas de défaillance d'une pompe, le module concerné peut être arrêté et les autres modules peuvent continuer à fonctionner.

Contrairement aux systèmes selon l'art antérieur, une telle architecture permet également de s'affranchir des contraintes de conception du réseau (par exemple en cas de pertes de charges hydrauliques différentes dans chaque branche parallèle).

US2010183936 divulgue une pile à combustible comprenant plusieurs empilements de cellules élémentaires de pile à combustible, au moins une partie des empilements étant montés électriquement en parallèle et de façon modulaire pour permettre d'adapter le niveau de puissance électrique fourni par la pile, la pile comprenant un circuit de refroidissement comprenant au moins une pompe DE102007054246 divulgue une pile à combustible comprenant plusieurs empilements, chaque empilement ayant sa propre pompe.

Cette architecture permet également de réaliser au démarrage de la pile des mises hors gel séquencées des différents empilements pour accélérer et/ou optimiser le démarrage du système à basse température. En particulier, en cas de démarrage séquencé (un empilement est mis en marche après l'autre), le volume de liquide de refroidissement à chauffer est moins important au démarrage.

De plus, cette architecture facilite la maintenance de la pile. En effet, les interventions sont concentrées sur des modules qui ont sensiblement les mêmes fréquences de maintenance.

## Revendications

1. Pile à combustible comprenant plusieurs empilements (1, 2) de cellules élémentaires de pile à combustible, au moins une partie des empilements (1, 2) étant montés électriquement en parallèle et de façon modulaire pour permettre d'adapter le niveau de puissance électrique fourni par la pile (4) en adaptant le nombre d'empilements (1, 2) présents dans la pile, la pile comprenant un circuit (5) de refroidissement comprenant plusieurs branches (15, 25) liées respectivement aux empilements (1, 2) modulaires et fluidiquement en parallèle pour le refroidissement sélectif desdits empilements (1, 2) par échange thermique, un liquide caloporteur étant sélectivement mis en circulation dans le circuit (5) de refroidissement via au moins une pompe, **caractérisée en ce que** le circuit de refroidissement comprend des pompes (11, 12) distinctes disposées respectivement dans plusieurs desdites branches (15, 25) du circuit de refroidissement, et **en ce que** le circuit (5) de refroidissement comporte une pompe respective (11, 12) dans chacune desdites branches (15, 25) parallèles du circuit (5) de refroidissement, lesdites pompes (11, 12) étant structurellement liées auxdits empilements (1, 2, 3) modulaires correspondants.

2. Pile selon la revendication 1, **caractérisée en ce que** chaque ensemble comprenant une branche (15, 25) du circuit de refroidissement, une pompe (11, 12), et un empilement (1, 2) correspondants sont structurellement lié dans un boîtier amovible respectif, une extrémité de la branche (15, 25) comprenant des organes (9) de connexion fluidique rapide amovible coopérant sélectivement avec des organes conjugués formés sur une partie du circuit (5) de refroidissement commune à tous les empilements (1, 2) située en dehors des branches (15, 25).

3. Pile selon la revendication 2, **caractérisée en ce que** les organes (9) de connexion fluidique de la branche (15, 25) et les organes conjugués formés sur la partie du circuit (5) de refroidissement commune sont du type à ouverture automatique lors de la connexion fluidique et à fermeture automatique lors de la déconnexion.

4. Pile selon l'une quelconque des revendications 1 à 3, **caractérisée en ce que** le circuit (5) de refroidissement comprend un échangeur (6) de chaleur de refroidissement sélectif du liquide caloporteur, ledit échangeur (6) de chaleur étant disposée dans une partie du circuit (5) de refroidissement commune à tous les empilements (1, 2), c'est-à-dire en dehors des branches (15, 25) parallèles des empilements (1, 2) modulaires.

5. Pile selon la revendication 4, **caractérisée en ce que** le circuit (5) de refroidissement comprend une portion (16) de by-pass sélectif de l'échangeur (6) de chaleur et au moins une vanne (7) de répartition sélective du liquide dans la portion de by-pass.

6. Pile selon la revendication 5, **caractérisée en ce que** le circuit (5) de refroidissement comprend un réchauffeur (10) du liquide caloporteur disposé dans la portion (16) de by-pass de l'échangeur (6) de chaleur.

7. Pile selon l'une quelconque des revendications 1 à 6, **caractérisée en ce que** le circuit (5) de refroidissement comprend au moins un capteur (8) disposé dans une partie du circuit (5) de refroidissement commune à tous les empilements (1, 2), c'est-à-dire en dehors des branches (15, 25) parallèles des empilements (1, 2) modulaires.

8. Pile selon l'une quelconque des revendications 1 à 7, **caractérisée en ce qu'**elle comprend une logique (19) électronique reliée aux différentes pompes (11, 12) situées dans les branches (15, 25) parallèles du circuit (5) de refroidissement, la logique (19) électronique étant configurée pour réguler indépendamment lesdites pompes (11, 12) et donc les débits de liquide de refroidissement dans lesdites branches (15, 25) parallèles.

9. Pile selon l'une quelconque des revendications 1 à 8, **caractérisée en ce que** les branches (15, 25) du circuit de refroidissement de refroidissement comprennent chacune un clapet (3) anti-retour disposé en aval de la pompe (11) et de l'empilement (1, 2) correspondant pour empêcher un écoulement de liquide à l'encontre du sens de circulation de fluide créé par la pompe.

## Patentansprüche

1. Brennstoffzelle, die mehrere Stapelungen (1, 2) von Brennstoffzellen-Elementarzellen umfasst, wobei mindestens ein Teil der Stapelungen (1, 2) derart elektrisch parallel und modular geschaltet ist, um zu erlauben, das Niveau elektrischer Leistung, das von der Brennstoffzelle (4) geliefert wird, anzupassen, indem die Anzahl von Stapelungen (1, 2), die in der Brennstoffzelle vorhanden sind, angepasst wird, wobei die Brennstoffzelle einen Kühlkreislauf (5) umfasst, der mehrere Zweige (15, 25) umfasst, die jeweils mit den modularen und fluidtechnisch parallelen Stapelungen (1, 2) für das selektive Kühlen der Stapelungen (1, 2) durch Wärmeaustausch verbunden sind, wobei eine Kühlflüssigkeit selektiv in dem Kühlkreislauf (5) über mindestens eine Pumpe in Umlauf gebracht wird, **dadurch gekennzeichnet, dass** der Kühlkreislauf getrennte Pumpen (11, 12) umfasst, die jeweils in mehreren der Zweige (15, 25) des Kühlkreislaufs angeordnet sind, und dass der Kühlkreislauf (5) eine jeweilige Pumpe (11, 12) in jedem der parallelen Zweige (15, 25) des Kühlkreislaufs (5) umfasst, wobei die Pumpen (11, 12) strukturmäßig mit den entsprechenden modularen Stapelungen (1, 2, 3) verbunden sind.

2. Brennstoffzelle nach Anspruch 1, **dadurch gekennzeichnet, dass**, da jede Einheit einen Zweig (15, 25) des Kühlkreislaufs umfasst, eine Pumpe (11, 12) und eine entsprechende Stapelung (1, 2) strukturmäßig in einem jeweiligen abnehmbaren Gehäuse verbunden sind, wobei ein Ende des Zweigs (15, 25) abnehmbare Organe (9) zur schnellen fluidtechnischen Verbindung umfasst, die selektiv mit dazugehörenden Organen zusammenwirken, die auf einem allen Stapelungen (1, 2) gemeinsamen Teil des Kühlkreislaufs (5) ausgebildet sind, der außerhalb der Zweige (15, 25) liegt.

3. Brennstoffzelle nach Anspruch 2, **dadurch gekennzeichnet, dass** die Organe (9) zur fluidtechnischen Verbindung des Zweigs (15, 25) und die dazugehörenden Organe, die auf dem gemeinsamen Teil des Kühlkreislaufs (5) ausgebildet sind, des Typs mit automatischem Öffnen bei der fluidtechnischen Verbindung und mit automatischem Schließen bei dem Trennen sind.

4. Brennstoffzelle nach einem der Ansprüche 1 bis 3, **dadurch gekennzeichnet, dass** der Kühlkreislauf (5) einen Wärmeaustauscher (6) zum selektiven Kühlen der Kühlflüssigkeit umfasst, wobei der Wärmeaustauscher (6) in einem allen Stapelungen (1, 2) gemeinsamen Teil des Kühlkreislaufs (5) angeordnet ist, das heißt außerhalb der parallelen Zweige (15, 25) der modularen Stapelungen (1, 2).

5. Brennstoffzelle nach Anspruch 4, **dadurch gekennzeichnet, dass** der Kühlkreislauf (5) einen selektiven Bypassabschnitt (16) des Wärmeaustauschers (6) und mindestens einen Schieber (7) zur selektiven Verteilung der Flüssigkeit in dem Bypassabschnitt umfasst.

6. Brennstoffzelle nach Anspruch 5, **dadurch gekennzeichnet, dass** der Kühlkreislauf (5) einen Aufwärmer (10) der Kühlflüssigkeit umfasst, der in dem Bypassabschnitt (16) des Wärmeaustauschers (6) angeordnet ist.

7. Brennstoffzelle nach einem der Ansprüche 1 bis 6, **dadurch gekennzeichnet, dass** der Kühlkreislauf (5) mindestens einen Fühler (8) umfasst, der in einem allen Stapelungen (1, 2) gemeinsamen Teil des Kühlkreislaufs (5) angeordnet ist, das heißt außerhalb der parallelen Zweige (15, 25) der modularen Stapelungen (1, 2).

8. Brennstoffzelle nach einem der Ansprüche 1 bis 7, **dadurch gekennzeichnet, dass** sie eine elektronische Logik (19) umfasst, die mit den verschiedenen Pumpen (11, 12) verbunden ist, die sich in den parallelen Zweigen (15, 25) des Kühlkreislaufs (5) befinden, wobei die elektronische Logik (19) konfiguriert ist, um unabhängig die Pumpen (11, 12) und daher die Durchsätze an Kühlflüssigkeit in den parallelen Zweigen (15, 25) zu regulieren.

9. Brennstoffzelle nach einem der Ansprüche 1 bis 8, **dadurch gekennzeichnet, dass** die Zweige (15, 25) des Kühlkreislaufs des Kühlkreislaufs jeweils ein Rückschlagventil (3) umfassen, das stromabwärts der Pumpe (11) und der entsprechenden Stapelung (1, 2) angeordnet ist, um ein Fließen der Flüssigkeit gegen die Fluidumlaufrichtung, die von der Pumpe geschaffen wird, zu verhindern.

## Claims

1. Fuel cell comprising a plurality of stacks (1, 2) of elementary fuel cells, at least some of the stacks (1, 2) being connected electrically in parallel and in a modular fashion to make it possible to adapt the electrical power level supplied by the cell (4) by adapting the number of stacks (1, 2) present in the cell, the cell comprising a cooling circuit (5) comprising a plurality of branches (15, 25) connected respectively to the modular stacks (1, 2) and fluidically in parallel for the selective cooling of said stacks (1, 2) by heat exchange, a heat-transfer liquid being selectively circulated in the cooling circuit (5) via at least one pump, **characterised in that** the cooling circuit comprises separate pumps (11, 12) disposed respectively in a plurality of said branches (15, 25) of the cooling circuit, and **in that** the cooling circuit (5) comprises a respective pump (11, 12) in each of said parallel branches (15, 25) of the cooling circuit (5), said pumps (11, 12) being structurally connected to said corresponding modular stacks (1, 2, 3).

2. Cell according to claim 1, **characterised in that**, each assembly comprising a branch (15, 25) of the cooling circuit, a corresponding pump (11, 12) and stack (1, 2) are structurally connected in a respective removable housing, one end of the branch (15, 25) comprising removable fast fluidic connection members (9) cooperating selectively with conjugate members formed on a part of the cooling circuit (5) common to all the stacks (1, 2) situated outside the branches (15, 25).

3. Cell according to claim 2, **characterised in that** the fluidic connection members (9) of the branch (15, 25) and the conjugate members formed on the common part of the cooling circuit (5) are of the type with automatic opening at the time of fluidic connection and automatic closure at the time of disconnection.

4. Cell according to any one of claims 1 to 3, **characterised in that** the cooling circuit (5) comprises a heat exchanger (6) for selective cooling of the heat-transfer liquid, said heat exchanger (6) being disposed in a part of the cooling circuit (5) common to all the stacks (1, 2), that is to say outside the parallel branches (15, 25) of the modular stacks (1, 2).

5. Cell according to claim 4, **characterised in that** the cooling circuit (5) comprise a selective bypass portion (16) of the heat exchanger (6) and at least one valve (7) for selective distribution of the liquid in the bypass portion.

6. Cell according to claim 5, **characterised in that** the cooling circuit (5) comprises a heater (10) for the heat-transfer liquid disposed in the bypass portion (16) of the heat exchanger (6).

7. Cell according to any one of claims 1 to 6, **characterised in that** the cooling circuit (5) comprises at least one sensor (8) disposed in a part of the cooling circuit (5) common to all the stacks (1, 2), that is to say outside the parallel branches (15, 25) of the modular stacks (1, 2).

8. Cell according to any one of claims 1 to 7, **characterised in that** it comprises electronic logic (19) connected to the various pumps (11, 12) situated in the parallel branches (15, 25) of the cooling circuit (5), the electronic logic (19) being configured so as to independently regulate said pumps (11, 12) and therefore the flows of cooling liquid in said parallel branches (15, 25).

9. Cell according to any one of claims 1 to 8, **characterised in that** the branches (15, 25) of the cooling cooling circuit each comprise a non-return valve (3) disposed downstream of the pump (11) and of the corresponding stack (1, 2) in order to prevent flow of liquid counter to the direction of flow of fluid created by the pump.
